# FASCICULE DE BREVET EUROPEEN

(11) **EP 1 928 744 B1**
(45) Date de publication et mention de la délivrance du brevet: **26.05.2010**
(21) Numéro de dépôt: 06806825.3
(22) Date de dépôt: 26.09.2006
(51) Int. Cl.: B64D 33/10, F02C 7/14

(54) **ENSEMBLE MOTEUR POUR AERONEF COMPRENANT UN MOTEUR AINSI QU'UN MAT D'ACCROCHAGE D'UN TEL MOTEUR**
MOTORANORDNUNG FÜR EIN FLUGZEUG MIT EINEM MOTOR SOWIE EINER MOTORMONTAGESTRUKTUR FÜR EINEN DERARTIGEN MOTOR
ENGINE ASSEMBLY FOR AN AIRCRAFT COMPRISING AN ENGINE AS WELL AS AN ENGINE MOUNTING STRUCTURE FOR SUCH AN ENGINE

(30) Priorité: 28.09.2005 FR 0552930
(43) Date de publication de la demande: 11.06.2008
(73) Titulaire: AIRBUS OPERATIONS, 31060 Toulouse (FR)
(72) Inventeur: JOURNADE, Frédéric, F-31100 Toulouse (FR); BRUNET, Robert, F-31470 Fontenilles (FR)
(74) Mandataire: Ilgart, Jean-Christophe
(86) Numéro de dépôt international: PCT/EP2006/066742
(87) Numéro de publication internationale: WO 2007/036523

(56) Documents cités:
- EP-A- 0 469 825
- EP-A- 0 517 459
- EP-A- 0 743 434
- EP-A- 1 018 468
- EP-A- 1 266 826
- EP-A- 1 365 203
- GB-A- 2 302 371

## Description

### DOMAINE TECHNIQUE

La présente invention se rapporte de façon générale au domaine des mâts d'accrochage de moteur destinés à être interposés entre une voilure d'aéronef et un moteur, et plus particulièrement à un ensemble moteur comprenant un tel mât d'accrochage.

L'invention peut être utilisée sur tout type d'aéronef équipé par exemple de turboréacteurs ou de turbopropulseurs.

Ce type de mât d'accrochage, également appelé « EMS » (de l'anglais « Engine Mounting Structure »), permet par exemple de suspendre un turbomoteur au-dessous de la voilure de l'aéronef, ou bien de monter ce turbomoteur au-dessus de cette même voilure.

### ETAT DE LA TECHNIQUE ANTERIEURE

Un tel mât d'accrochage est en effet prévu pour constituer l'interface de liaison entre un moteur tel qu'un turboréacteur et une voilure de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

Afin d'assurer la transmission des efforts, le mât comporte une structure rigide, dite également structure primaire, souvent du type « caisson », c'est-à-dire formée par l'assemblage de longerons supérieur et inférieur et de deux panneaux latéraux raccordés entre eux par l'intermédiaire de nervures transversales.

D'autre part, le mât est muni d'un système de montage interposé entre le turboréacteur et la structure rigide du mât, ce système comportant globalement au moins deux attaches moteur, généralement une attache avant et une attache arrière.

De plus, le système de montage comprend un dispositif de reprise des efforts de poussée générés par le turboréacteur. Dans l'art antérieur, ce dispositif prend par exemple la forme de deux bielles latérales raccordées d'une part à une partie arrière du carter de soufflante du turboréacteur, et d'autre part à l'attache moteur arrière fixée sur le carter de ce dernier.

De la même façon, le mât d'accrochage comporte également un second système de montage interposé entre la structure rigide de ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques, dont le carénage aérodynamique arrière inférieur faisant habituellement saillie du bord de fuite de l'aile, vers l'arrière.

Par ailleurs, l'ensemble moteur est aussi équipé d'un système d'échangeur thermique. Lorsque ce dernier est du type classique, c'est-à-dire du type air/air, il comporte un échangeur auquel sont reliés une prise d'air chaud, une prise d'air froid, une première sortie destinée à être raccordée sur un élément de voilure de l'aéronef, ainsi qu'une seconde sortie débouchant au-dessus de la structure rigide du mât, en amont de l'attache moteur arrière. Cette disposition particulière de la seconde sortie présente un certain nombre d'inconvénients tel que celui nécessitant de prévoir un conduit de sortie traversant verticalement la structure rigide du mât pour amener la seconde sortie au-dessus de cette dernière, ce qui engendre des problèmes évidents de sécurité, ainsi que des difficultés d'implantation liées à la faible accessibilité au caisson formant la structure rigide.

En outre, avec un tel agencement, l'air relativement chaud sort de la seconde sortie à proximité de l'aile de l'aéronef, ce qui vient sensiblement perturber l'écoulement aérodynamique au niveau de cette dernière. Les performances de l'aéronef sont donc susceptibles d'être affaiblies par ces perturbations.

De l'art antérieur, on connaît également le document EP-A-0 743 434 décrivant un autre type d'ensemble moteur dans lequel la seconde sortie de l'échangeur débouche entre le carter moteur et un carénage interne de la veine d'air froid, à proximité du groupe de compresseurs. Néanmoins, la localisation spécifique vers l'avant du moteur de cette seconde sortie communiquant avec la prise d'air froid de l'échangeur ne permet pas de faire une utilisation optimisée du fluide s'échappant de cette même seconde sortie. De plus, la présence de l'échangeur dans le canal annulaire secondaire engendre un encombrement important.

L'arrière-plan technologique est également illustré par le document EP-A-0469825.

### EXPOSÉ DE L'INVENTION

L'invention a donc pour but de proposer un ensemble moteur pour aéronef remédiant au moins partiellement aux inconvénients mentionnés ci-dessus relatifs aux réalisations de l'art antérieur, et également de présenter un aéronef disposant d'au moins un tel ensemble moteur.

Pour ce faire, l'invention a pour objet un ensemble moteur pour aéronef comprenant un moteur et un mât d'accrochage du moteur, ce mât comportant d'une part une structure rigide, dite également structure primaire, comprenant un caisson préférentiellement pourvu d'un élément structural inférieur tel qu'un longeron inférieur, et d'autre part un système de montage interposé entre le moteur et la structure rigide, ce système de montage comportant notamment une attache moteur arrière, et l'ensemble étant en outre pourvu d'un système d'échangeur thermique comportant un échangeur auquel sont reliés une prise de fluide chaud, une prise d'air froid, une première sortie par exemple destinée à être raccordée sur un élément de voilure de l'aéronef lorsque le système d'échangeur thermique est du type air/air, ainsi qu'au moins une seconde sortie. A ce titre, la première sortie communique avec la prise de fluide chaud, et ladite au moins une seconde sortie communique avec la prise d'air froid. Selon l'invention, chaque seconde sortie du système d'échangeur thermique se trouve située entre le caisson et le moteur, donc de préférence en dessous de l'élément structural inférieur du type longeron inférieur lorsque le moteur est destiné à être suspendu sous l'aile de l'aéronef, chaque seconde sortie étant agencée en arrière par rapport à l'attache moteur arrière. De plus, l'échangeur du système d'échangeur thermique est agencé au moins partiellement à l'intérieur d'un carénage aérodynamique arrière du mât d'accrochage, ce carénage aérodynamique arrière étant situé entièrement en arrière par rapport à l'attache moteur arrière.

Ainsi, cet agencement selon l'invention ne nécessite avantageusement pas de prévoir un second conduit de sortie traversant le caisson de la structure rigide du mât, puisque la seconde sortie d'air se situe en dessous de l'élément structural inférieur de ce caisson, comme cela est aussi le cas pour l'échangeur lorsque le moteur est destiné à être suspendu sous la voilure. La sécurité de l'ensemble moteur ainsi que la facilité de montage du système d'échangeur thermique sont par conséquent accrues. D'autre part, la position spécifique à la présente invention de la seconde sortie implique avantageusement que l'air qui s'en extrait ne vient plus perturber l'écoulement au niveau de l'aile. Les performances de l'aéronef peuvent donc être améliorées par rapport à celles rencontrées avec les réalisations de l'art antérieur.

Aussi, il doit donc être compris que la seconde sortie débouche au-delà de l'attache moteur arrière, à un niveau où les pressions sont sensiblement plus élevées que celles rencontrées en amont de cette attache moteur. Par conséquent, le différentiel de pression obtenu entre la prise d'air froid et la seconde sortie du système d'échangeur est largement supérieur à celui rencontré antérieurement en raison de la forte aspiration rencontrée au niveau de cette seconde sortie, ce qui permet d'augmenter sensiblement le débit d'air traversant le système d'échangeur, et donc d'accroître les performances de ce dernier.

Par ailleurs, étant donné que la seconde sortie se trouve à l'arrière de l'attache moteur arrière, il devient alors aisé de faire déboucher cette sortie dans le jet du moteur, et par la même d'utiliser l'air éjecté de cette seconde sortie comme générateur additionnel de poussée.

De plus, comme mentionné ci-dessus, l'échangeur du système d'échangeur thermique est agencé au moins partiellement à l'intérieur du carénage aérodynamique arrière du mât d'accrochage. Dans une telle configuration qui permet donc d'utiliser l'air éjecté de la seconde sortie comme générateur additionnel de poussée, un avantage réside dans le fait de diminuer l'encombrement entre la partie avant du caisson et le moteur, ce qui engendre une réduction des perturbations de la ventilation de ce même moteur, ainsi qu'une meilleure accessibilité dans cette zone qui est généralement adjacente à la zone core du moteur. De plus, le flux secondaire n'est plus perturbé par la présence de l'échangeur dans cette zone, ce qui engendre une augmentation des performances du moteur.

En outre, dans ce cas où l'échangeur n'est par conséquent plus situé en amont de l'attache moteur arrière, la prise d'air froid peut avantageusement se situer plus en arrière que dans l'art antérieur, comme par exemple au niveau d'une partie avant du carénage précité, donc en un point où les pressions sont plus élevées. Cela permet à l'air froid d'entrer dans le système d'échangeur avec une pression plus forte, synonyme de gain en terme de performance pour ce même système.

De préférence, la seconde sortie du système d'échangeur débouche à l'intérieur du carénage aérodynamique arrière du mât d'accrochage. Dans un tel cas, on peut alors prévoir une ouverture de sortie d'air à l'arrière de ce carénage pour assurer l'extraction de l'air, cette ouverture pouvant éventuellement être couplée à une structure mobile pilotable, qui, en fonction de sa position, permet de modifier la forme aérodynamique dudit carénage. Avec un tel agencement où la structure mobile est de préférence placée à travers l'ouverture, le pilotage de la structure mobile permet donc de réduire / d'augmenter l'aspiration de l'air sortant de l'ouverture prévue sur ce carénage, suivant que ce dernier est dans une configuration définissant un ou plusieurs décrochements visant à créer un effet de culot pour générer une aspiration d'air importante, ou dans une configuration définissant une forme aérodynamique sensiblement continue et sans décrochement, afin de provoquer le moins de traînée possible.

Alternativement, toujours dans le cas où la seconde sortie du système d'échangeur débouche à l'intérieur du carénage aérodynamique arrière, on peut prévoir que ce dernier soit équipé d'une structure mobile pilotable comportant deux panneaux latéraux articulés au niveau de leur extrémité avant, respectivement sur deux revêtements latéraux du carénage, chacun des panneaux étant alors destiné à obturer/libérer une ouverture pratiquée dans son revêtement latéral associé du carénage.

Le mât est réalisé de telle sorte que la structure rigide du mât d'accrochage comporte également un bloc structural monté fixement sur le caisson entre ce dernier et le moteur, et de préférence sous l'élément structural inférieur du caisson lorsque le moteur est destiné à être suspendu sous l'aile de l'aéronef, ce bloc structural dit alors bloc structural inférieur présentant une interface de fixation de l'attache moteur arrière.

Ainsi, dans le cas non limitatif où le moteur est destiné à être suspendu sous la voilure de l'aéronef, cet agencement permet globalement de déporter l'attache moteur arrière vers le bas par rapport au caisson, grâce au bloc structural inférieur faisant donc partie intégrante de la structure rigide et étant assimilable à une étrave ou un sabot. L'adjonction de ce bloc par rapport aux réalisations de l'art antérieur dans lesquelles la structure rigide était exclusivement constituée du caisson permet de procurer de nombreux avantages, dont celui d'éloigner ce même caisson du moteur suspendu au mât. Par conséquent, les conditions thermiques que subit ce caisson sont bien moins importantes que celles rencontrées antérieurement dans des réalisations où l'interface de fixation de l'attache moteur arrière était située directement sur l'élément structural inférieur du type longeron inférieur. Cet allègement des conditions thermiques permet donc d'envisager l'emploi de matériaux moins sensibles à la chaleur pour la fabrication du caisson rigide, tels que les matériaux composites du type fibres de verre ou de carbone imprégnées de résine. Dans un tel cas, il peut avantageusement en découler un gain de masse très important pour l'ensemble du mât d'accrochage.

En outre, il permet de dissocier la conception du bloc structural, essentiellement dictée par la nécessité d'assurer le passage des efforts provenant de l'attache moteur arrière, de celle du caisson, principalement dimensionné en fonction de l'interface voilure qu'il supporte. Cette particularité implique que la largeur du bloc peut être inférieure à celle du caisson, procurant ainsi un avantage considérable en terme de performances aérodynamiques, étant donné que c'est le bloc de faible largeur qui se trouve dans la zone d'écoulement du flux secondaire, et non plus la partie inférieure du caisson de largeur plus élevée. Les perturbations aérodynamiques au droit de l'attache moteur arrière sont ainsi fortement diminuées par rapport à celles rencontrées antérieurement.

D'autre part, il est bien entendu à comprendre que la géométrie du caisson n'est plus influencée par la nécessité de se rapprocher du carter moteur, puisque cette fonction peut être entièrement assurée par le bloc structural inférieur rapporté fixement sur ce caisson. La géométrie de ce dernier peut par conséquent être considérablement simplifiée, tout comme sa fabrication, notamment en prévoyant une face inférieure de caisson plane d'un bout à l'autre de la structure rigide. Sa masse est alors réduite et parfaitement optimisée, dans la mesure où la partie inférieure du caisson ne présente avantageusement plus de décrochement de largeur importante exclusivement destiné à se rapprocher du carter moteur.

Enfin, il est indiqué que le bloc faisant saillie du caisson vers le bas et ne s'étendant que sur une faible longueur longitudinale de la structure rigide permet aisément d'envisager de faire passer des canalisations ou éléments similaires à travers ce même bloc structural inférieur. Cette faculté offerte aux équipements du mât facilite donc l'accès à la partie arrière de la structure rigide, qui, dans l'art antérieur, nécessitait de traverser le caisson dont l'accessibilité est relativement délicate.

Toujours de manière préférentielle, la première sortie du système d'échangeur thermique est prévue sur un premier conduit de sortie raccordé à l'échangeur et traversant le caisson de la structure rigide. Cette disposition est tout à fait adaptée dans le cas où le système d'échangeur thermique est du type air/air, et que la première sortie est destinée à être raccordée sur un élément de voilure de l'aéronef. Néanmoins, il est noté que l'invention couvre également d'autres cas dans lesquels le fluide traversant le système d'échangeur thermique et sortant par la première sortie est destiné à intéresser non pas la voilure et/ou le fuselage, mais le moteur, la nacelle, ou encore sur la structure rigide du mât.

A ce titre, il est également noté que le système d'échangeur thermique du type fluide/air est tel que le fluide traversant la prise de fluide chaud ainsi que la première sortie est pris parmi le groupe constitué de l'air, de l'huile et du carburant.

La prise de fluide chaud du système d'échangeur thermique est prévue sur un conduit de fluide chaud raccordé à l'échangeur et traversant le bloc structural de la structure rigide, pour que cette prise de fluide chaud vienne de préférence se fixer sur la zone core du moteur, c'est-à-dire au niveau du carter central de ce dernier. Bien entendu, dans le cas où le fluide traversant l'échangeur n'est pas de l'air mais du carburant ou de l'huile, le raccordement de cette prise de fluide chaud peut s'effectuer à un emplacement autre que la zone core du moteur.

Enfin, on prévoit de préférence que chaque seconde sortie est située entre le caisson et le moteur, au droit d'une tuyère d'éjection du moteur ou en aval de celle-ci.

L'invention a également pour objet un aéronef comprenant au moins un ensemble moteur tel que celui qui vient d'être présenté.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un ensemble moteur pour aéronef selon un mode de réalisation préféré de la présente invention, le système d'échangeur thermique du caisson ayant été volontairement omis pour des raisons de clarté ;
- la figure 2 représente une vue en perspective agrandie du bloc structural inférieur appartenant à la structure rigide du mât d'accrochage de l'ensemble moteur montré sur la figure 1 ;
- les figures 3a et 3b représentent respectivement une vue partielle de côté et une vue partielle en perspective de l'ensemble moteur représenté sur les figures 1 et 2, montrant plus spécifiquement le système d'échangeur thermique ;
- les figures 4a et 4b représentent des vues de dessus d'une portion arrière du carénage aérodynamique arrière du mât d'accrochage appartenant à l'ensemble montré sur la figure 3a, représentant plus spécifiquement une structure mobile pilotable capable dé réduire / d'augmenter l'aspiration de l'air en sortie du carénage ;
- la figure 5 représente une vue similaire à celles montrées sur les figures 4a et 4b, la structure mobile pilotable se présentant sous une forme alternative de réalisation ;
- la figure 6a représente la partie arrière de l'ensemble moteur montré sur la figure 3a, avec un carénage aérodynamique arrière équipé d'une structure mobile pilotable se présentant sous une autre forme alternative de réalisation ; et
- la figure 6b représente une vue en coupe prise le long de la ligne VI-VI de la figure 6a.

### EXPOSÉ DÉTAILLÉ DE MODES DE RÉALISATION PRÉFÉRÉS

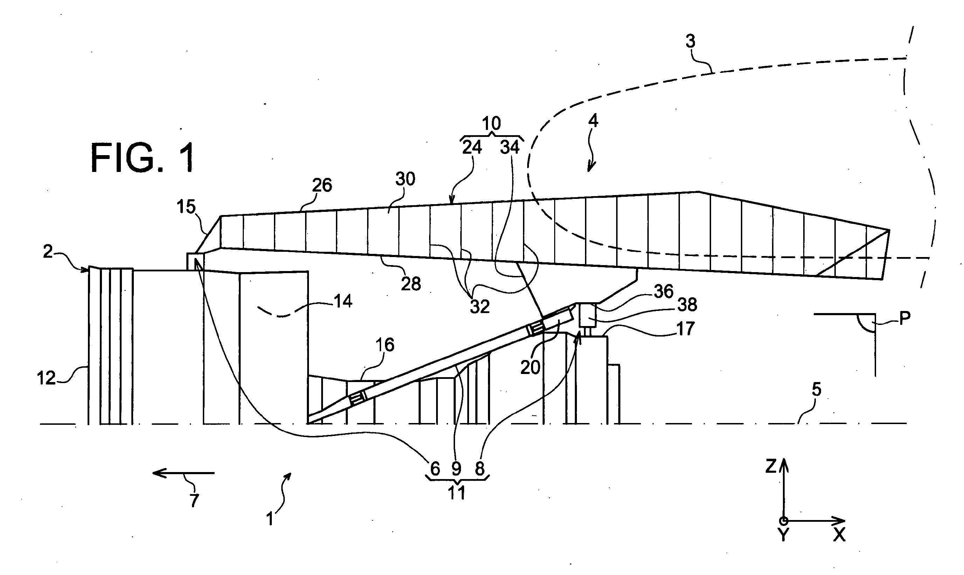

En référence à la figure 1, on voit un ensemble moteur 1 pour aéronef destiné à être fixé sous une aile 3 de cet aéronef, cet ensemble 1, pourvu d'un mât d'accrochage 4, se présentant sous la forme d'un mode de réalisation préféré de la présente invention.

Globalement, l'ensemble moteur 1 comporte un moteur tel qu'un turboréacteur 2 et le mât d'accrochage 4, ce dernier étant notamment muni d'une structure rigide 10 et d'un système de montage 11 composé d'une pluralité d'attaches moteur 6, 8 et d'un dispositif de reprise des efforts de poussée 9 généré par le turboréacteur 2, le système de montage 11 étant donc interposé entre le moteur et la structure rigide 10 précitée. A titre indicatif, il est noté que l'ensemble 1 est destiné à être entouré d'une nacelle (non représentée sur cette figure), et que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seuls le dispositif de reprise 9, les attaches moteur 6, 8, et la structure rigide 10 du mât d'accrochage 4 ont été représentées. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée, mis à part pour le carénage aérodynamique arrière inférieur susceptible de présenter une particularité liée à la présente invention.

Le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres.

Comme on peut l'apercevoir sur la figure 1, la pluralité d'attaches moteur est constituée par une attache moteur avant 6 et une attache moteur arrière 8 formant éventuellement deux demi-attaches arrière tel que cela est connu de l'art antérieur. Le dispositif de reprise 9 prend par exemple la forme de deux bielles latérales (une seule étant visible en raison de la vue de côté) raccordées d'une part à une partie arrière du carter de soufflante 12, et d'autre part sur un palonnier 20, lui-même monté sur la structure rigide 10.

L'attache moteur avant 6, solidarisée à la ferrure 15 de la structure rigide 10 et au carter de soufflante 12, est conçue classiquement de manière à pouvoir reprendre uniquement des efforts générés par le turboréacteur 2 selon les directions Y et Z, et donc pas ceux s'exerçant selon la direction X. A titre indicatif, cette attache avant 6 pénètre de préférence dans une portion d'extrémité circonférentielle du carter de soufflante 12.

L'attache moteur arrière 8 est globalement interposée entre le carter d'éjection 17 et la structure rigide 10 du mât. Comme indiqué précédemment, elle est de préférence conçue de manière à pouvoir reprendre des efforts générés par le turboréacteur 2 selon les directions Y et Z, mais pas ceux s'exerçant selon la direction X.

De cette manière, avec le système de montage 11 de nature isostatique, la reprise des efforts s'exerçant selon la direction X s'effectue à l'aide du dispositif 9, et la reprise des efforts s'exerçant selon les directions Y et Z s'effectue conjointement à l'aide de l'attache avant 6 et de l'attache arrière 8.

D'autre part, la reprise du moment s'exerçant selon la direction X s'effectue verticalement à l'aide de l'attache 8, la reprise du moment s'exerçant selon la direction Y s'effectue verticalement à l'aide de l'attache arrière 8 conjointement avec l'attache 6, et la reprise du moment s'exerçant selon la direction Z s'effectue transversalement à l'aide de l'attache 8, conjointement avec l'attache 6.

Toujours en référence à la figure 1, on peut apercevoir que la structure 10 présente tout d'abord un caisson 24 s'étendant d'un bout à l'autre de cette structure 10 dans la direction X, et forme donc un caisson de torsion dit caisson principal de la structure. Il est classiquement formé par un longeron supérieur 26 et un longeron inférieur 28, ainsi que par deux panneaux latéraux 30 (un seul étant visible sur la figure 1) s'étendant tous les deux selon la direction X et sensiblement dans un plan XZ. A l'intérieur de ce caisson, des nervures transversales 32 agencées selon des plans YZ et espacées longitudinalement viennent renforcer la rigidité du caisson 24. Il est noté à titre indicatif que les éléments 26, 28 et 30 peuvent chacun être réalisés d'un seul tenant, ou bien par l'assemblage de sections jointives, qui peuvent éventuellement être légèrement inclinées les unes par rapport aux autres.

De préférence, comme le montre clairement la figure 1, le longeron inférieur 28 est plan sur toute sa longueur, ce plan étant sensiblement parallèle à un plan XY ou légèrement incliné par rapport à ce dernier.

Dans ce cas où le moteur est destiné à être suspendu sous la voilure, il est prévu de monter fixement, sur la surface externe du longeron inférieur 28, un bloc structural 34 dit bloc structural inférieur 34 en raison de sa position sous le caisson 24. Néanmoins, il est noté que dans un cas non décrit mais couvert par la présente invention où le moteur 2 serait monté au-dessus de l'aile 3, le bloc structural serait alors rapporté fixement sur le longeron supérieur 26 du caisson.

Le bloc 34 présente une interface de fixation 36 de l'attache arrière 8, cette interface 36 étant donc située en dessous du plan dans lequel se trouve le longeron 28, et de préférence orientée selon un plan XY. Comme cela sera décrit ultérieurement, il est précisé que cette interface de fixation 36 est destinée à coopérer avec un corps d'attache de l'attache moteur arrière 8.

Cette solution dans laquelle la largeur du bloc 34 selon la direction Y est moins importante que celle du caisson 24, permet par conséquent de déporter l'attache 8 vers le bas par rapport au caisson 24, et donc d'espacer le moteur 2 de ce dernier.

Les sollicitations thermiques appliquées au caisson 24 sont ainsi relativement peu élevées, de sorte qu'il devient possible de le fabriquer en matériau composite, ou dans tout autre matériau sensible à la chaleur susceptible d'engendrer un gain en terme de masse globale du mât 4. En revanche, le bloc 34 plus exposé à ces sollicitations thermiques en raison de sa proximité avec le moteur 2 peut être réalisé avec un matériau métallique, de préférence le titane.

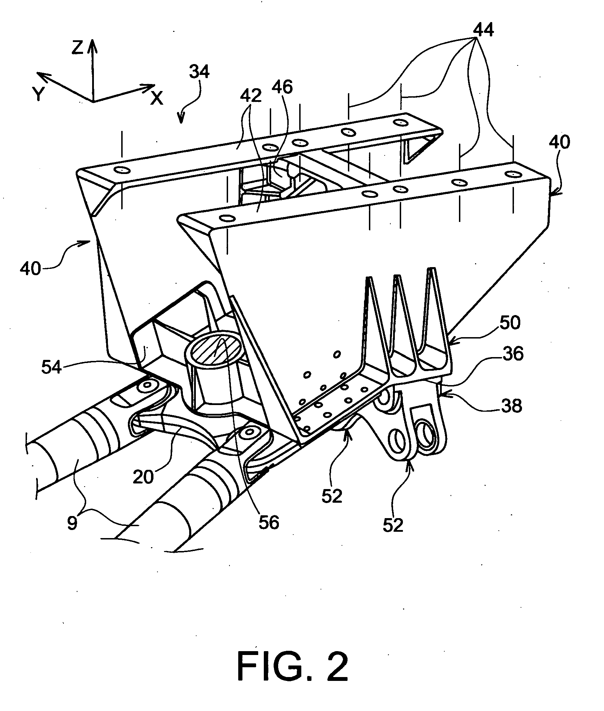

En référence à présent à la figure 2, on peut apercevoir que le bloc structural 34 fixé sous le longeron inférieur 28 présente globalement deux flancs latéraux 40, chacun équipé en partie supérieure d'une ailette de fixation 42 orientée selon le plan de ce même longeron 28 afin de contacter ce dernier et d'assurer la fixation du bloc 34 sur le caisson 24. A ce titre, cette fixation est de préférence réalisée par l'intermédiaire d'une pluralité de boulons de traction et de pions de cisaillement (non représentés) agencés perpendiculairement au longeron inférieur 28, selon des axes 44 traversant les ailettes 42. Ces moyens de fixation permettent avantageusement de réduire la conduction thermique entre le bloc 34 et le longeron inférieur 28, cette conduction pouvant être encore davantage réduite en intercalant des bagues ou des rondelles isolantes entre ces deux éléments 24, 34.

D'autre part, le bloc 34 comporte également une ou plusieurs nervures transversales 46 agencées entre les deux flancs 40, et de préférence orientées selon des plans YZ.

L'interface de fixation 36 est définie par une portion inférieure 50 des deux flancs 40, éventuellement en combinaison avec l'une des nervures 46 se présentant de préférence sous la forme d'un cadre. Ainsi, cette interface de fixation 36 formée par les deux portions inférieures 50 des flancs 40 et par la partie inférieure de la nervure 46 en question constituent globalement une bande horizontale s'étendant selon la direction Y sur laquelle vient se fixer le corps d'attache 38 de l'attache moteur arrière 8, de préférence par l'intermédiaire de boulons.

Ce corps d'attache 38 est du type connu et de conception sensiblement identique à celle rencontrée antérieurement dans les réalisations dans lesquelles ce corps était monté directement sur le longeron inférieur 28 du caisson. Ainsi, celui-ci définit des chapes 52 sur lesquelles sont articulées des manilles (non représentées) également destinées à être articulées sur des ferrures solidaires du moteur.

En outre, une ferrure de fixation 54 du palonnier 20 est aussi agencée entre les deux flancs latéraux 40, de préférence en avant par rapport au corps d'attache 38. Cette ferrure 54 porte alors un pivot 56 du palonnier 20, lui-même articulé à ses deux extrémités avec les deux bielles 9 de reprise des efforts de poussée.

Enfin, il est indiqué que ce bloc 34 peut prendre la forme d'un caisson rigide secondaire, et incorporer des plaques de fermeture avant et arrière (non représentées) solidaires des flancs 40, fermant respectivement ce caisson vers l'avant et vers l'arrière.

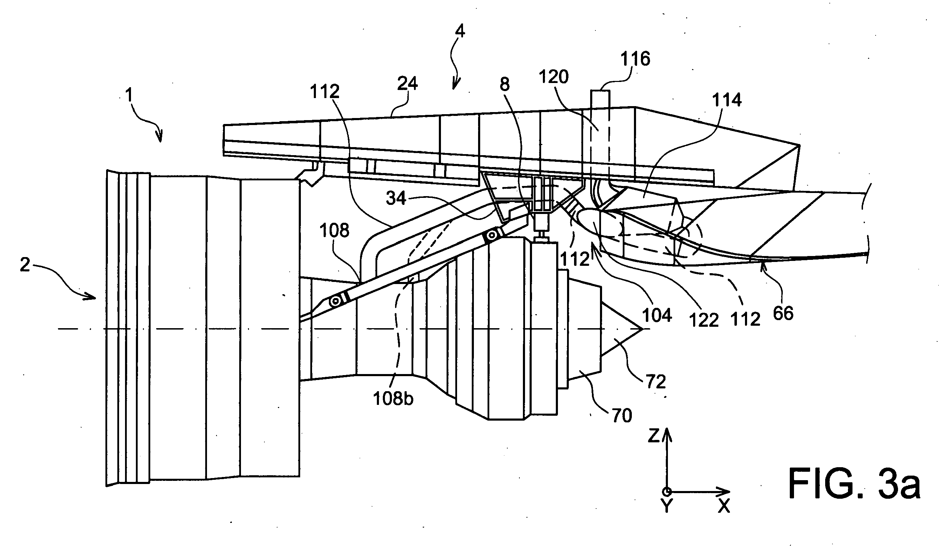

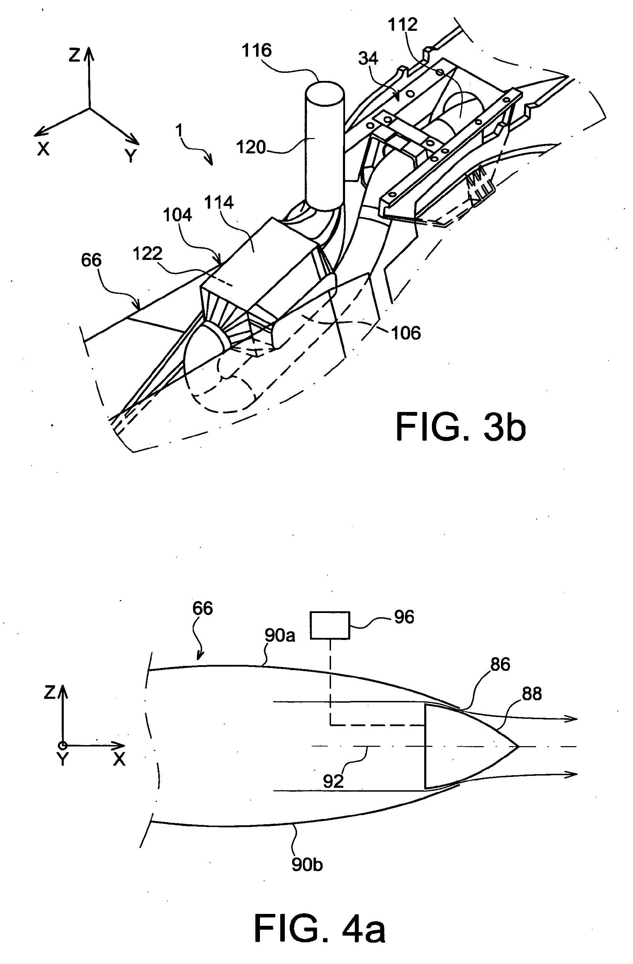

En référence aux figures 3a et 3b, on voit que l'ensemble moteur 1 comporte en plus un système d'échangeur thermique 104, qui est globalement constitué à l'aide d'une prise d'air froid 10.6 et d'une prise d'air chaud 108, la prise d'air froid 106 étant agencée sous le caisson 24, de préférence en arrière par rapport à l'attache arrière 8, et au niveau d'un carénage aérodynamique arrière 66 comme cela sera décrit ci-après. La prise d'air chaud 108 est quant à elle raccordée directement sur le carter central du moteur 2. Elle est prévue au niveau de l'extrémité avant d'un conduit d'air chaud 112, raccordé par l'intermédiaire de son autre extrémité à un échangeur thermique 114 situé entre le caisson 24 et le moteur 2, en aval de l'attache arrière 8 et du bloc structural 34. Il est noté que l'échangeur 114 dispose d'une conception quelconque connue de l'homme du métier.

D'autre part, le système 104 comprend une première sortie 116 destinée à être raccordée sur l'aile, de manière à pouvoir assurer les fonctions de dégivrage, de conditionnement de l'air cabine, etc. Cette sortie 116 est agencée à l'extrémité d'un premier conduit de sortie 120 dont l'autre extrémité est raccordée à l'échangeur 114. Pour pouvoir rejoindre l'aile, on prévoit que ce conduit 120 traverse le caisson 24, de préférence verticalement comme cela est visible sur les figure 3a et 3b.

Enfin, le système d'échangeur 104 est équipé d'une seconde sortie 122, étant entendu que la première sortie communique avec la prise d'air chaud, et que cette seconde sortie communique avec la prise d'air froid.

L'une des particularités de l'invention réside dans le fait que la seconde sortie 122 se trouve agencée en arrière par rapport à l'attache 8, sous le longeron 28 du caisson 24 dans le cas où le moteur est destiné à être suspendu sous la voilure de l'aéronef. Pour ce faire, comme indiqué ci-dessus, on prévoit que l'échangeur 114 est au moins partiellement situé à l'intérieur du carénage 66, donc en aval du bloc 34 et de l'attache arrière 8. A cet égard, sur la figure 3a, il a été représenté ce carénage aérodynamique équipant le mât 4, qui est plus spécifiquement connu sous l'appellation carénage aérodynamique arrière ou carénage aérodynamique arrière inférieur, ou encore « bouclier » ou « Aft Pylon Fairing ». Ce carénage 66, agencé de préférence sous le caisson 24, se trouve entièrement situé en arrière par rapport l'attache 8, et fait habituellement saillie vers l'arrière d'un bord de fuite de l'aile 3. Il ne fait donc pas partie de la structure rigide du mât, mais est raccordé à celle-ci par une ferrure de support (non représentée) montée fixement sous le caisson 24, en arrière par rapport au bloc 34.

Sur les figures 3a et 3b, on peut voir que le conduit d'air chaud 112 portant la prise d'air chaud 108 rapportée sur le carter central 16 du moteur 2 traverse le bloc 34 vers l'aval, pour rejoindre l'échangeur 114 logée au moins partiellement dans le carénage 66, de préférence au niveau d'une partie amont de celui-ci. Il est aussi précisé que le conduit d'air chaud 112 peut porter une prise d'air chaud additionnelle 108b, également rapportée sur le moteur 2, en arrière par rapport la prise 108.

D'autre part, la prise d'air froid 106 et la seconde sortie 122 sont de préférence situées latéralement de part et d'autre de l'échangeur 114, en arrière de l'attache arrière 8, comme on le voit également sur les figures 3a et 3b.

Par conséquent, la seconde sortie 122 débouche au moins en partie à l'intérieur du carénage 66. Ainsi, étant donné que l'air extrait de cette seconde sortie 122 est avantageusement utilisé pour générer de la poussée, la configuration décrite ci-dessus peut alors présenter une ouverture de sortie d'air sur ce carénage.

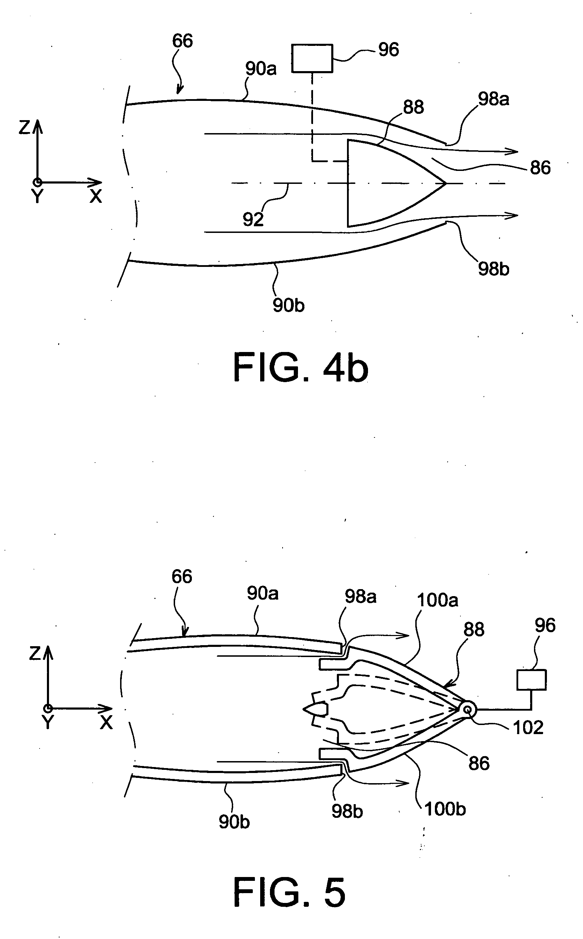

En référence aux figures 4a et 4b, on peut apercevoir une première façon de réaliser la portion arrière du carénage aérodynamique 66, celui-ci étant alors pourvu de ladite ouverture de sortie d'air 86 dans sa portion d'extrémité arrière.

Dans cette réalisation, on voit que l'ouverture 86 est couplée à une structure mobile pilotable 88, qui, en fonction de sa position, permet de modifier la forme aérodynamique du carénage 66. En effet, cette structure 88 prend de préférence la forme d'une ogive ou similaire, qui, lorsqu'elle occupe une position arrière dite position déployée aérodynamique, fait saillie depuis l'ouverture 86 de manière à se situer sensiblement dans le prolongement aérodynamique des revêtements latéraux 90a, 90b du carénage 66, comme cela est visible sur la figure 4a. Cette structure 88, qui est pilotable en translation selon une direction 92 de préférence sensiblement parallèle à la direction X, par exemple par l'intermédiaire de moyens d'actionnement 96 lui étant reliés, permet donc d'obtenir un carénage 66 de forme aérodynamique sensiblement continue et sans décrochement, qui génère une traînée peu importante. A titre indicatif, cette position aérodynamique sera préférentiellement adoptée durant les phases de vitesses élevées dé l'aéronef.

Sur la figure 4b représentant la structure mobile 88 dans une position avant dite position escamotée d'aspiration, on peut voir que cette structure 88 est quasiment entièrement rentrée par rapport à l'ouverture 86 qui dispose alors d'une section plus importante, ce qui implique notamment que le prolongement aérodynamique des revêtements latéraux 90a, 90b du carénage 66 n'est plus assuré. Au contraire, un décrochement ou rupture aérodynamique 98a, 98b apparaît au niveau de l'extrémité arrière de chacun de ces deux revêtements 90a, 90b, ce qui génère des effets de culot provoqués par l'air léchant la paroi extérieure de ces revêtements 90a, 90b. Ces effets de culot assurent ainsi une augmentation de l'aspiration de l'air sortant de l'ouverture 86, favorisant de ce fait l'efficacité du système de protection 58.

Par conséquent, cette position d'aspiration sera préférentiellement adoptée durant les phases de vitesses faibles de l'aéronef. Effectivement, à faible vitesse, la traînée provoquée par les décrochements 98a, 98b n'est pas pénalisante, et l'aspiration créée par ceux-ci permet d'augmenter le différentiel de pression, qui, sans la présence de ces décrochements, serait d'une valeur peu élevée due à la faible vitesse de l'aéronef.

En référence à présent à la figure 5, on peut apercevoir une seconde façon de réaliser la portion arrière du carénage aérodynamique 66, celui-ci étant également pourvu de l'ouverture de sortie d'air 86 dans sa portion d'extrémité arrière.

Dans cette réalisation, on voit que l'ouverture 86 est couplée à une structure mobile 88 qui ne prend plus la forme d'une ogive, mais de deux panneaux 100a, 100b articulés l'un par rapport à l'autre au niveau de leur extrémité arrière selon un axe 102 de préférence parallèle à la direction Y, ces panneaux 100a, 100b faisant en permanence saillie de l'ouverture 86.

Dans la position écartée représentée en traits pleins, dite position déployée aérodynamique, les deux panneaux 100a, 100b disposent d'une extrémité avant en appui contre l'extrémité arrière des revêtements 90a, 90b du carénage 66, de manière à se situer sensiblement dans le prolongement aérodynamique de ces derniers. Cette structure 88, qui est donc pilotable en rotation selon l'axe 102, par exemple par l'intermédiaire des moyens d'actionnement 96 lui étant reliés, permet donc d'obtenir un carénage 66 de forme aérodynamique sensiblement continue et sans décrochement, qui génère une traînée peu importante.

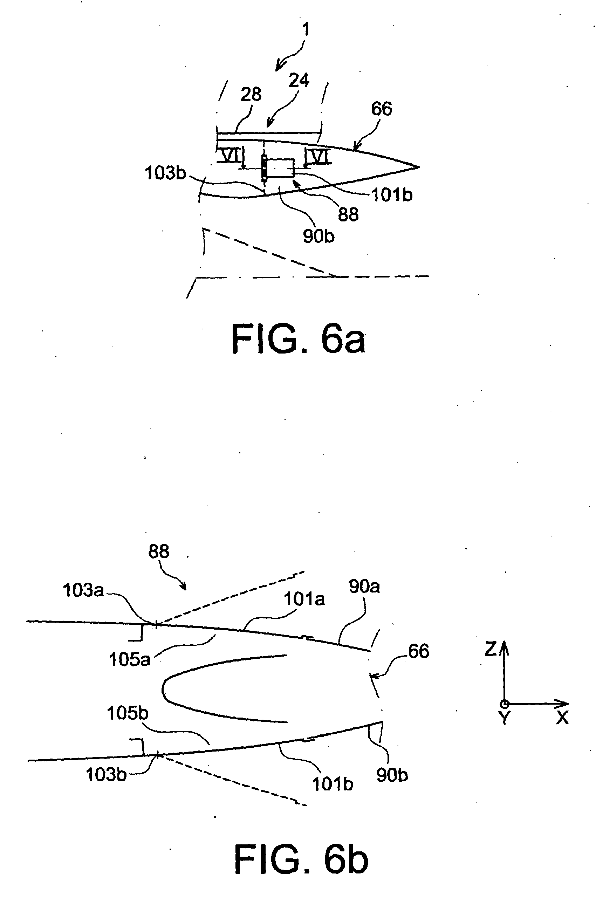

Dans la position rapprochée dite position escamotée d'aspiration représentée en pointillés sur la figure 6, on peut voir que les deux extrémités avant des panneaux 100a, 100b qui ont été rapprochés par pivotement sont respectivement très éloignées des extrémités arrière des revêtements 90a, 90b, impliquant notamment que l'ouverture 86 dispose d'une section plus importante, mais surtout que le prolongement aérodynamique de ces revêtements latéraux 90a et 90b du carénage 66 n'est plus assuré. Au contraire, un décrochement ou rupture aérodynamique 98a, 98b apparaît entre l'extrémité arrière de chacun de ces deux revêtements 90a, 90b et son panneau 100a, 100b associé situé plus en arrière, ce qui génère des effets de culot provoqués par l'air léchant la paroi extérieure de ces revêtements 90a, 90b.

Dans les deux alternatives qui viennent d'être décrites, un avantage lié à une telle utilisation est de pouvoir bénéficier d'une ouverture 86 de section variable en fonction de la position de la structure mobile 88. En effet, la possible régulation de la quantité d'air sortant de la seconde sortie par variation de la section de l'ouverture du carénage permet de supprimer la vanne prévue dans ce même but qui était antérieurement placée en amont sur le système d'échangeur.

En référence à présent aux figures 6a et 6b, on peut apercevoir une troisième façon d'assurer l'éjection de l'air hors du carénage aérodynamique 66, sans que celui-ci ne soit pourvu d'une ouverture de sortie dans sa portion d'extrémité arrière, mais de deux ouvertures 105a, 105b situées de part et d'autre du carénage 66, respectivement sur les deux revêtements latéraux 90a, 90b de ce dernier. A titre indicatif, ces ouvertures 105a, 105b peuvent se situer dans ou à proximité d'une zone centrale du carénage 66, considérée selon la direction X.

En effet, dans cette réalisation, on voit que la structure mobile 88 prend globalement la forme de deux panneaux latéraux / volets 101a, 101b chacun articulé au niveau de son extrémité avant sur un revêtement latéral 90a, 90b du carénage 66, respectivement selon des axes 103a et 103b de préférence parallèle à la direction Z.

Dans la position rabattue représentée en traits pleins, dite position aérodynamique, les deux panneaux 101a, 101b disposent d'une extrémité arrière en appui contre les revêtements 90a, 90b du carénage 66, de manière à se situer sensiblement dans le prolongement aérodynamique de ces derniers. Cette structure 88, qui est donc pilotable en rotation par exemple par l'intermédiaire des moyens d'actionnement (non représentés) lui étant reliés, permet donc d'obtenir un carénage 66 de forme aérodynamique sensiblement continue et sans décrochement, qui génère une traînée peu importante. Dans cette position rabattue, chacun des panneaux latéraux 101a, 101b obture donc son ouverture associée 105a, 105b pratiquée dans le revêtement latéral 90a, 90b concerné du carénage.

Dans la position déployée dite position d'éjection d'air représentée en pointillés sur la figure 6b, on peut voir que les deux extrémités arrière des panneaux 101a, 101b qui ont été écartés par pivotement selon les axes 103a, 103b sont respectivement éloignées des revêtements 90a, 90b, impliquant notamment que le prolongement aérodynamique de ces revêtements latéraux 90a et 90b du carénage 66 n'est plus assuré, mais surtout que l'air situé dans la carénage 66 peut s'échapper par les espaces libres créés entre les revêtements 90a, 90b et les extrémités arrière des panneaux latéraux 101a, 101b. L'écartement des panneaux / volets latéraux 101a, 101b, qui entraîne donc une libération des ouvertures 105a, 105b susmentionnées, est également naturellement susceptible de provoquer un effet avantageux d'aspiration, lorsque ceux-ci sont déployés.

Cette solution de panneaux / volets latéraux 101a, 101b est notamment retenue lorsqu'il est décidé de mettre en oeuvre conjointement les deux sorties 122a et 122b, comme cela est représenté schématiquement sur la figure 6a.

Un système adapté (non représenté) peut alors permettre de privilégier l'éjection d'air soit par la sortie 122a, soit par la sortie 122b, soit par ces deux dernières simultanément. A cet égard, il est noté que la sortie 122a sera préférentiellement utilisée en cas de panne et pour les hauts débits (basses vitesses de l'aéronef), tandis que la sortie 122b sera préférentiellement utilisée en croisière ou pour les faibles débits (hautes vitesses de l'aéronef).

Bien entendu, diverses modifications peuvent être apportées par l'homme du métier aux ensembles moteur 1 pour aéronef qui viennent d'être décrits, uniquement à titre d'exemples non limitatifs. A cet égard, on peut notamment indiquer qui si le mât 4 a été présenté dans une configuration adaptée pour qu'il soit suspendu sous la voilure de l'aéronef, ce mât 4 pourrait également se présenter dans une configuration différente lui permettant d'être monté au-dessus de cette même voilure.

Par ailleurs, le système d'échangeur thermique mis en oeuvre dans la présente invention pourrait être d'un autre type que air/air, à savoir carburant/air ou huile/air, sans sortir du cadre de l'invention.

## Revendications

1. Ensemble moteur (1) pour aéronef comprenant un moteur (2) et un mât d'accrochage (4) du moteur, ledit mât comportant d'une part une structure rigide (10) comprenant un caisson (24) et d'autre part un système de montage (11) interposé entre le moteur (2) et ladite structure rigide (10), ce système de montage (11) comportant notamment une attache moteur arrière (8), ledit ensemble étant en outre pourvu d'un système d'échangeur thermique (104) comportant un échangeur (114) auquel sont reliés une prise de fluide chaud (108), une prise d'air froid (106), une première sortie (116) communiquant avec la prise de fluide chaud (108) ainsi qu'au moins une seconde sortie (122) communiquant avec la prise d'air froid (106), chaque seconde sortie (122) du système d'échangeur thermique (104) se trouvant située entre ledit caisson (24) et le moteur (2), chaque seconde sortie (122) étant située en arrière par rapport à ladite attache moteur arrière (8), et ledit échangeur (114) du système d'échangeur thermique (104) étant agencé au moins partiellement à l'intérieur d'un carénage aérodynamique arrière (66) du mât d'accrochage (4), ledit carénage aérodynamique arrière (66) étant situé entièrement en arrière par rapport à ladite attache moteur arrière (8),
**caractérisé en ce que** ladite structure rigide (10) du mât d'accrochage (4) comporte également un bloc structural (34) monté fixement sur ledit caisson (24) entre ce dernier et ledit moteur (2), ce bloc structural (34) présentant une interface de fixation (36) de ladite attache moteur arrière (8), et **en ce que** ladite prise de fluide chaud (108) du système d'échangeur thermique (104) est prévue sur un conduit d'air chaud (112) raccordé à l'échangeur (114) et traversant ledit bloc structural (34) de la structure rigide (10).

2. Ensemble moteur (1) selon la revendication 1, **caractérisé en ce que** ladite seconde sortie (122) débouche à l'intérieur dudit carénage aérodynamique arrière (66) du mât d'accrochage (4).

3. Ensemble moteur (1) selon la revendication 2, **caractérisé en ce que** ledit carénage aérodynamique arrière (66) comprend une ouverture de sortie d'air (86) équipée d'une structure mobile pilotable (88), qui, en fonction de sa position, permet de modifier la forme aérodynamique dudit carénage (66).

4. Ensemble moteur (1) selon la revendication 3, **caractérisé en ce que** ladite structure mobile (88) est placée à travers ladite ouverture de sortie d'air (86).

5. Ensemble moteur (1) selon la revendication 2, **caractérisé en ce que** ledit carénage aérodynamique arrière (66) est équipé d'une structure mobile pilotable (88) comportant deux panneaux latéraux (101a, 101b) articulés au niveau de leur extrémité avant, respectivement sur deux revêtement latéraux (90a, 90b) du carénage (66), chacun desdits panneaux (101a, 101b) étant destiné à obturer/libérer une ouverture (105a, 105b) pratiquée dans son revêtement latéral associé (90a, 90b) du carénage (66).

6. Ensemble moteur (1) selon l'une quelconque des revendications précédentes, **caractérisé en ce que** ladite première sortie (116) du système d'échangeur thermique (104) est prévue sur un premier conduit de sortie (120) raccordé à l'échangeur (114) et traversant ledit caisson (24) de la structure rigide (10).

7. Ensemble moteur (1) selon la revendication 6, **caractérisé en ce que** ladite première sortie (116) est destinée à être raccordée sur un élément de voilure (3) de l'aéronef.

8. Ensemble moteur (1) selon l'une quelconque des revendications précédentes, **caractérisé en ce que** ledit système d'échangeur thermique (104) est du type fluide/air, le fluide traversant la prise de fluide chaud (108) ainsi que ladite première sortie (116) et étant pris parmi le groupe constitué de l'air, de l'huile et du carburant.

9. Ensemble moteur (1) selon l'une quelconque des revendications précédentes, **caractérisé en ce que** chaque seconde sortie (122) est située entre ledit caisson (24) et le moteur (2), au droit d'une tuyère d'éjection (70) du moteur ou en aval de celle-ci.

10. Aéronef **caractérisé en ce qu'**il comprend au moins un ensemble moteur (1) selon l'une quelconque des revendications précédentes.

## Claims

1. An engine assembly (1) for aircraft comprising an engine (2) and a pylon (4) for attaching the engine, said pylon including a rigid structure (10) comprising a case (24) on the one hand and a mounting system (11) interposed between the engine (2) and said rigid structure (10) on the other hand, this mounting system (11) notably including a rear engine attachment (8), said assembly being further provided with a heat exchanger system (104) including an exchanger (114) to which a hot fluid intake (108), a cold air intake (106) are connected, a first outlet (116) communicating with the hot fluid intake (108) as well as at least one second outlet (122) communicating with the cold air intake (106), each second outlet (122) of the heat exchanger system (104) being found located between said case (24) and the engine (2), each second outlet (122) being located at the rear relatively to said rear engine attachment (8), and said exchanger (114) of the heat exchanger system (104) being at least partly laid out inside a rear aerodynamic fairing (66) of the attachment pylon (4), said rear aerodynamic fairing (66) being entirely located at the rear relatively to said rear engine attachment (8),
**characterized in that** said rigid structure (10) of the attachment pylon (4) also includes a structural block (34) fixedly mounted on said case (24) between the latter and said engine (2), this structural block (34) having an attachment interface (36) of said rear engine attachment (8), and **in that** said hot fluid intake (108) of the heat exchanger system (104) is provided on a hot air duct (112) connected to the exchanger (114) and passing through said structural block (34) of the rigid structure (10).

2. The engine assembly (1) according to claim 1, **characterized in that** said second outlet (122) opens into the inside of said rear aerodynamic fairing (66) of the attachment pylon (4).

3. The engine assembly (1) according to claim 2, **characterized in that** said rear aerodynamic fairing (66) comprises an aperture (86) for air outflow equipped with a controllable mobile structure (88), which depending on its position allows modification of the aerodynamic shape of said fairing (66).

4. The engine assembly (1) according to claim 3, **characterized in that** said mobile structure (88) is placed through said air outflow aperture (86).

5. The engine assembly (1) according to claim 2, **characterized in that** said rear aerodynamic fairing (66) is equipped with a controllable mobile structure (88) including two side panels (101a, 101b) jointed at their front end, on two side coverings (90a, 90b) of the fairing (66) respectively, each of said panels (101a, 101b) being intended for blocking/clearing an aperture (105a, 105b) made in its associated side covering (90a, 90b) of the fairing (66).

6. The engine assembly (1) according to any of the preceding claims, **characterized in that** said first outlet (116) of the heat exchanger system (104) is provided on a first outlet duct (120) connected to the exchanger (114) and passing through said case (24) of the rigid structure (10).

7. The engine assembly (1) according to claim 6, **characterized in that** said first outlet (116) is intended to be connected on a wing system element (3) of the aircraft.

8. The engine assembly (1) according to any of the preceding claims, **characterized in that** said heat exchanger system (104) is of the fluid/air type, the fluid passing through the hot fluid intake (108) as well as said first outlet (116) and being taken from the group consisting of air, oil and fuel.

9. The engine assembly (1) according to any of the preceding claims, **characterized in that** each second outlet (122) is located between said case (24) and the engine (2), at right angles to an ejection nozzle (70) of the engine or downstream from the latter.

10. An aircraft **characterized in that** it comprises at least one engine assembly according to any of the preceding claims.

## Patentansprüche

1. Triebwerkanordnung (1) für ein Luftfahrzeug, umfassend ein Triebwerk (2) und eine Aufhängungsstruktur (4) für das Triebwerk, wobei die Struktur einerseits eine starre Struktur (10), die einen Kasten (24) umfaßt, und andererseits ein Anbringungssystem (11), das zwischen das Triebwerk (2) und die starre Struktur (10) eingefügt ist, umfaßt, wobei dieses Anbringungssystem (11) insbesondere eine hintere Triebwerkaufhängung (8) umfaßt, wobei die Anordnung ferner mit einem Wärmeaustauschersystem (104) ausgestattet ist, das einen Austauscher (114) umfaßt, an dem ein Einlaß für ein heißes Fluidum (108), ein Einlaß für kalte Luft (106), ein erster Ausgang (116), der mit dem Einlaß für ein heißes Fluidum (108) in Verbindung steht, sowie mindestens ein zweiter Ausgang (122), der mit dem Einlaß für kalte Luft (106) in Verbindung steht, angebracht ist, wobei sich jeder zweite Ausgang (122) des Wärmeaustauschersystems (104) zwischen dem Kasten (24) und dem Triebwerk (2) befindet, wobei sich jeder zweite Ausgang (122) in Bezug auf die hintere Triebwerkaufhängung (8) dahinter befindet und der Austauscher (114) des Wärmeaustauschersystems (104) mindestens teilweise im Inneren einer hinteren aerodynamischen Stromlinienverkleidung (66) der Aufhängungsstruktur (4) angeordnet ist, wobei sich die hintere aerodynamische Stromlinienverkleidung (66) in Bezug auf die hintere Triebwerkaufhängung (8) vollständig dahinter befindet,
**dadurch gekennzeichnet, daß** die starre Struktur (10) des Aufhängungssystems (4) auch einen Strukturblock (34) umfaßt, der fest an dem Kasten (24) zwischen dem letzteren und dem Triebwerk (2) angebracht ist, wobei dieser Strukturblock (34) ein Befestigungszwischenstück (36) der hinteren Triebwerkaufhängung (8) aufweist, und daß der Einlaß für ein heißes Fluidum (108) des Wärmeaustauschersystems (104) mit einer Leitung für heiße Luft (112) ausgestattet ist, die am Austauscher (114) angebracht ist und den Strukturblock (34) der starren Struktur (10) durchläuft.

2. Triebwerkanordnung (1) nach Anspruch 1, **dadurch gekennzeichnet, daß** der zweite Ausgang (122) im Inneren der hinteren aerodynamischen Stromlinienverkleidung (66) des Aufhängungssystems (4) mündet.

3. Triebwerkanordnung (1) nach Anspruch 2, **dadurch gekennzeichnet, daß** die hintere aerodynamische Stromlinienverkleidung (66) eine Luftaustrittsöffnung (86) umfaßt, die mit einer beweglichen schwenkbaren Struktur (88) ausgestattet ist, die in Abhängigkeit von ihrer Position eine Modifizierung der aerodynamischen Form der Stromlinienverkleidung (66) gestattet.

4. Triebwerkanordnung (1) nach Anspruch 3, **dadurch gekennzeichnet, daß** die bewegliche Struktur (88) quer über die Luftaustrittsöffnung (86) angeordnet ist.

5. Triebwerkanordnung (1) nach Anspruch 2, **dadurch gekennzeichnet, daß** die hintere aerodynamische Stromlinienverkleidung (66) mit einer beweglichen schwenkbaren Struktur (88) ausgestattet ist, die zwei Seitenplatten (101a, 101b) umfaßt, die im Bereich ihres Vorderendes jeweils mit zwei Seitenverkleidungen (90a, 90b) der Stromlinienverkleidung (66) beweglich verbunden sind, wobei jede dieser Platten (101a, 101b) zum Verschließen/ Öffnen einer Öffnung (105a, 105b), die in der zugehörigen Seitenverkleidung (90a, 90b) der Stromlinienverkleidung (66) ausgeführt ist, dient.

6. Triebwerkanordnung (1) nach einem der vorhergehenden Ansprüche, **dadurch gekennzeichnet, daß** sich der erste Ausgang (116) des Wärmeaustauschersystems (104) an einer ersten Ausgangsleitung (120) befindet, die am Austauscher (114) angebracht ist und den Kasten (24) der starren Struktur (10) durchläuft.

7. Triebwerkanordnung (1) nach Anspruch 6, **dadurch gekennzeichnet, daß** der erste Ausgang (116) dazu bestimmt ist, an einem Tragflügelelement (3) des Luftfahrzeugs angebracht zu werden.

8. Triebwerkanordnung (1) nach einem der vorhergehenden Ansprüche, **dadurch gekennzeichnet, daß** das Wärmeaustauschersystem (104) vom Typ Fluidum/Luft ist, wobei das Fluidum durch den Einlaß für ein heißes Fluidum (108) sowie den ersten Ausgang (116) läuft und aus der Gruppe von Luft, Öl und Treibstoff ausgewählt ist.

9. Triebwerkanordnung (1) nach einem der vorhergehenden Ansprüche, **dadurch gekennzeichnet, daß** sich jeder zweite Ausgang (122) zwischen dem Kasten (24) und dem Triebwerk (2), direkt an einer Ausströmdüse (70) des Triebwerks oder unterhalb dieser befindet.

10. Luftfahrzeug, **dadurch gekennzeichnet, daß** es mindestens eine Triebwerkanordnung (1) nach einem der vorhergehenden Ansprüche umfaßt.
